# EUROPÄISCHE PATENTSCHRIFT

(11) **EP 3 332 635 B1**
(45) Veröffentlichungstag und Bekanntmachung des Hinweises auf die Patenterteilung: **11.03.2020**
(21) Anmeldenummer: 17189392.8
(22) Anmeldetag: 05.09.2017
(51) Int. Cl.: A01K 5/00

(54) **FUTTERMISCHWAGEN**
FEED MIXER VEHICLE
CHAR MÉLANGEUR

(30) Priorität: 08.12.2016 DE 202016106837 U
(43) Veröffentlichungstag der Anmeldung: 13.06.2018
(73) Patentinhaber: Trioliet B.V., 7575 BE Oldenzaal (NL)
(72) Erfinder: Liet, Cornelis Hendricus, 7581 PJ Losser (NL)
(74) Vertreter: Grünecker Patent- und Rechtsanwälte PartG mbB

(56) Entgegenhaltungen:
- EP-A1- 3 025 776
- WO-A1-2013/095281
- DE-A1-102010 033 886
- DE-U1-202010 005 053

## Beschreibung

Die Erfindung betrifft einen Futtermischwagen der im Oberbegriff des Anspruchs 1 angegebenen Art.

Bei einem gattungsgemäßen Futtermischwagen gemäß DE 102010033886 A1 ist der Kopf des Sensorsystems in einer Futterkomponenten-Beladeeinrichtung angeordnet, um Futterwerte nur der jeweils zu ladenden Futterkomponente zu ermitteln und dann im Zusammenspiel mit einer Wiegeeinrichtung die jeweilige Beladung zu steuern.

Bei dem Futtermischwagen der DE 202010005053 U1 wird die Mischgenauigkeit durch ein z.B. NIR-Sensorsystem ermittelt, dessen Kopf die Oberfläche der Futtermischung im Behälter während des Mischprozesses berührungslos abtastet, und den Mischprozess beendet, sobald Messwerte nicht mehr oder kaum mehr fluktuieren. Das Sensorsystem könnte alternativ auch mit Bildverarbeitung oder Wärmebildverarbeitung, Schall- und Schwingungsverarbeitung, Strahlung oder Radioaktivität bzw. Magnetresonanz betrieben werden. Das Sensorsystem muss in der Lage sein, mindestens zwei verschiedene Futterkomponenten im Messbereich quantitativ zu identifizieren bzw. eine sich über die Mischgenauigkeit ändernde Eigenschaft der Futtermischung anzuzeigen oder eine homogene Verteilung einer Eigenschaft einer Futterkomponente in der Masse der Futtermischung im Inneren des Mischbehälters festzustellen.

Aus EP 1577663 A ist ein Futtersensor für selbstfahrende Futter-Ladeeinheiten bekannt, der betreibbar ist, um Futterwerte jeweils nur einer Futterkomponente für die Futtermischung ermittelt, und dabei mit einer Wiegevorrichtung zusammen arbeitet.

Bei einer aus EP 2377392 A bekannten Futtermischvorrichtung ist ein Sensorsystem so angeordnet und betreibbar, dass Futterwerte nur jeweils einer zu ladenden Futterkomponente ermittelt werden, in Zusammenarbeit mit der Wiegevorrichtung.

Auch aus EP 1886556 A ist es bekannt, durch einen Sensor Futterwerte nur einer Futterkomponente vor deren Vermischung mit einer weiteren Futterkomponente zu ermitteln.

Aus EP 1889538 A ist es bekannt, Futterwerte in einer bereits fertigen Futtermischung zu ermitteln und abhängig von ermittelten Futterwerten individuelle Rationen für die Fütterung zu bemessen.

Dabei werden z.B. vom Sensor von den Futterkomponenten reflektierte NIR-Lichtwellen aufgenommen und spektroskopisch ausgewertet (Near-lnfraRed), wie beispielsweise aus WO 01/14857 A bekannt.

Von Interesse sind ferner WO 2013/095281 A1, EP 3 025 776 A1.

Der Erfindung liegt die Aufgabe zugrunde einen Futtermischwagen der eingangs genannten Art so zu verbessern, dass zumindest Futterwerte in der Futtermischung während des Mischprozesses ermittelbar sind, ohne jede Futterkomponente vor dem Mischprozess separat analysieren zu müssen, und um den Lade- und Mischprozess effizienter steuern zu können.

Die gestellte Aufgabe wird mit den Merkmalen des Anspruchs 1 gelöst.

Wenn der Kopf des mindestens einen Sensorsystems im Mischbehälter mitdrehend am drehangetriebenen Mischorgan an einer gezielt auf optimale Messwerte gewählten Messstelle innen in der Futtermischung angeordnet ist, ist beim Mischprozess stets inniger Kontakt mit der Futtermischung sichergestellt, um korrekte aktuelle Messergebnisse zu beschaffen. Ermittelte Futterwerte sind verschieden verarbeitbar. Entweder wird auf der Basis der Futterwerte die jeweilige, beim Mischprozess zuzugebende Menge einer jeden Futterkomponente bestimmt und überwacht, oder es wird über beim Mischprozess abnehmende Änderungen der vom Kopf ermittelten Futterwerte die Mischgenauigkeit bis zur Beendigung des Mischprozesses und/oder einer Zugabe überwacht. Es ist also am Mischorgan ein Kopf eines Futterwert-Sensor-Systems oder ein Kopf eines Mischgenauigkeits-Sensorsystems angeordnet, oder es sind diese beiden Köpfe am Mischorgan angeordnet. Das oder die Sensorsystem(e) ermöglicht(en) natürlich auch beide Vorgangsweisen gemeinsam oder nacheinander zu realisieren. Da der Kopf (Aufnahmekopf oder pick up head) des mindestens einen Sensorsystems innen in der Futtermischung im Mischbehälter und mitdrehend am oder im Mischorgan betreibbar ist, ermittelt er Futterwerte aller Futterkomponenten der Futtermischung, ohne jede Futterkomponente vorab separat analysieren zu müssen, wodurch zu jeder Zeit während des Mischprozesses eine aussagefähige Information zu aktuellen Futterwerten vorliegt. Mit einem Kombinations-Sensorsystem lassen sich sowohl Futterwerte als auch die Mischgenauigkeit in der aus den gemischten Futterkomponenten bestehenden Futtermischung ermitteln. Mit Ermittlung der Mischgenauigkeit, z.B. anhand abnehmender Fluktuationen der Futterwerte, kann ein Zeitpunkt zum Abbrechen des Mischprozesses, vorzugsweise mit einem Toleranzbereich, gesetzt werden, sobald sich keine oder kaum mehr Fluktuationen der Futterwerte bzw. Messergebnisse zeigen. Zweckmäßig ist nur ein Sensorsystem verbaut. Alternativ können mehr als ein Sensorsystem oder mehr als ein Kopf am oder im Mischorgan eingesetzt werden, wobei Messwerte zweckmäßig gemittelt werden können. So lassen sich der Ladeprozess und der Mischprozess effizient steuern.

Zweckmäßig ist das Sensorsystem ein auf reflektierte NIR-Lichtwellen ansprechendes NIR-Sensorsystem, dessen Kopf, zweckmäßig, beim Mischprozess in Kontakt mit der Futtermischung ist oder in dessen Inneres blickt. Das Arbeitsprinzip von NIR-Sensoren ist bekannt und wird deshalb nicht im Detail erläutert. Alternativ können jedoch auch andere Sensortypen für diesen Zweck eingesetzt werden. Selbst berührungslos ohne Kontakt mit der Futtermischung arbeitende Sensoren sind denkbar.

Bei einer zweckmäßigen Ausführung wird die Mischgenauigkeit entweder anhand Futterwertfluktuationen oder durch Bildverarbeitung mittels eines weiteren Kopfes überwacht. Im letzteren Fall sind sozusagen separate Futterwert- und Mischgenauigkeits-Sensor-Köpfe am Mischorgan und, ggf. zwei separate Sensorsysteme, vorgesehen.

In einer zweckmäßigen Ausführungsform ist der, vorzugsweise mit einem Analyserechner und/oder einer Batterie ausgestattete, Kopf des Sensorsystems über einen beim oder im Kopf angeordneten Bluetooth- oder WiFi-Sendermodul und einer drahtlosen Funksignalübertragungsstrecke, vorzugsweise einer Bluetooth- oder WiFi-Verbindung, mit einem außerhalb des Behälters platzierten Empfänger, z.B. einem mit einer Cloud oder einem Smartphone kommunizierenden WiFi- oder Bluetooth-Modul, verbunden. In der Cloud werden z.B. die ermittelten Messwerte analysiert. Das Resultat der Analyse wird rückübertragen zum Futtermischwagen und dann bei der Ladung oder Sortenwahl der Futterkomponente bzw. Futterkomponenten berücksichtigt. Dabei kann, nach einem wichtigen Gesichtspunkt der Erfindung, zunächst eine in den Mischbehälter geladene Futterkomponente untersucht und beurteilt werden, ehe eine weitere zugegeben wird, und gegebenenfalls noch eine weitere, und gegebenenfalls noch weitere Futterkomponenten, wobei stets die Futtermischung im Behälter als Ganzes analysiert und die weitere Zugabe von jeweiligen Futterkomponenten gesteuert wird.

Die Batterie, mit der der Kopf arbeitet, kann austauschbar sein. Zweckmäßig ist sie jedoch aufladbar, beispielsweise über eine Schleifringverbindung und einen am Futtermischwagen angeordneten Generator, oder noch zweckmäßiger auf drahtlosem Weg.

Im Hinblick auf einen möglichst automatisierten Betrieb ist es zweckmäßig, wenn das Sensorsystem mit einer computerisierten Steuerung verknüpft ist, und/oder einem Wiegecomputer, so dass über die Steuerung bzw. den Wiegecomputer die Mengen und/oder Sorten der beim Mischprozess geladenen Futterkomponenten an die ermittelten Futterwerte anpassbar sind, vorzugsweise sogar bis zum Ermitteln der vorbestimmten Mischgenauigkeit.

Bei einer zweckmäßigen Ausführungsform werden während des Mischprozesses über die Steuerung bzw. den Wiegecomputer ermittelte Futterwerte der Futtermischung mit auf das Beladestadium im Behälter repräsentierenden Messdaten des Wiegecomputers verglichen. Auf diese Weise ist zu jedem Zeitpunkt bekannt, ob noch eine weitere Teilmenge geladen werden muss, oder nicht, und/oder ob auf eine weitere oder die vorherige Futterkomponente übergegangen oder zurückgegriffen werden soll.

Besonders zweckmäßig ist der Futtermischwagen Teil einer automatischen Futteranlage, die zumindest auf der Basis der während des Mischprozesses ermittelten Futterwerte oder Mischgenauigkeit steuerbar ist.

In einer zweckmäßigen Ausführungsform ist das wenigstens eine Mischorgan eine Mischschnecke mit wenigstens einer bodenseitigen Aufnahmeplatte oder einem Rührflügel, einer Schneckenwendel und, vorzugsweise, einem Schneckenkernrohr. Der Kopf des Sensorsystems kann mit Batterie und Sendermodul an oder in der Aufnahmeplatte bzw. dem Rührflügel oder der Schneckenwendel oder am Schneckenkernrohr angeordnet sein, und zwar, vorzugsweise, zwischen dem Boden des Mischbehälters und im unteren Drittel der Schneckenhöhe. Bei einer derart platzierten Messstelle ist sichergestellt, dass auch bei geringer Beladung des Mischbehälters die Futtermischung am Kopf des Sensorsystems vorbeigeht und korrekt analysiert wird. Das angetriebene Mischorgan kann verschieden von einer vertikalen Mischschnecke sein (z.B. eine horizontale Mischschnecke, ein Paddelmischer, Ketten usw.).

In einer zweckmäßigen Ausführungsform weist der Kopf eine transparente Scheibe, vorzugsweise aus Glas, Plexiglas oder Panzerglas, auf, die bündig mit oder versenkt oder erhaben gegenüber der von der Futtermischung kontaktierten Oberfläche an der Messstelle platziert ist, wobei, zweckmäßig, die Batterie und der Sendermodul bei der Messstelle jedoch an der der Oberfläche abgewandten Rückseite des Mischorgans oder der Behälterwand oder des Bodens angeordnet sind, um den Fluss der zirkulierenden Futtermischung nicht spürbar zu beeinträchtigen.

Zweckmäßig ist der Kopf- vom größten Außendurchmesser der Mischschnecke mit etwa einem Drittel oder mehr des größten Außendurchmessers beabstandet. Diese Platzierung der Messstelle sichert hervorragende Messwerte.

Ist der Kopf an einem Rührflügel oder einer Aufnahmeplatte der Mischschnecke angeordnet, dann kann er entweder in einem in Drehrichtung der Mischschnecke ansteigenden oder einem abfallenden Teil platziert werden.

Schließlich ist es zweckmäßig, wenn der Futtermischwagen selbstfahrend, stationär, selbstladend, automatisch betreibbar ist oder geschoben oder gezogen wird, und der für den Wiegecomputer Wiegezellen, wenigstens eine Ausbringöffnung, und gegebenenfalls, eine Futterkomponenten-Ladeeinrichtung aufweist.

Anhand der Zeichnung werden Ausführungsformen des Erfindungsgegenstandes erläutert. Es zeigen:
Fig. 1 einen Achsschnitt eine Ausführung eines Futtermischwagens,
Fig. 2 einen Schnitt Fig. 1 einer geänderten Ausführungsform,
Fig. 3 einen Schnitt einer weiteren Ausführung mit geänderter Platzierung eines Kopfes eines Sensorsystems,
Fig. 4 einen Schnitt einer weiteren Ausführung mit geänderter Platzierung des Kopfes,
Fig. 5 eine Draufsicht zur Verdeutlichung der Platzierung eines Kopfes, und
Fig. 6 eine perspektivische Detaildarstellung einer möglichen Ausführung eines Mischorgans.

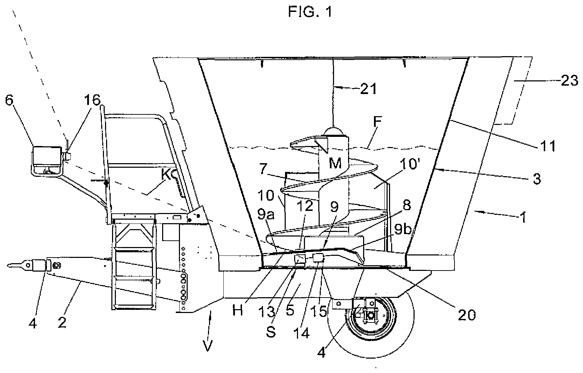

Die Erfindung wird nachstehend anhand einer in den Fig. 1 bis 6 als Futtermischwagen 1 ausgebildeten Futtermischvorrichtung V erläutert. Der Futtermischwagen 1 ist z.B. an einer Deichsel 2 oder selbstfahrend, z.B. vor Futterstellen manövrierbar, oder stationär eingesetzt. Die Erfindung ist jedoch nicht auf einen Futtermischwagen 1 beschränkt, sondern umfasst jegliche Typen von Futtermischvorrichtungen, z.B. selbstladende oder selbstfahrende Mischwägen oder eine automatische Futteranlage, in welche der Futtermischwagen eingegliedert ist, und Mischwägen mit oder ohne Beladeeinrichtung, mit einem Mischorgan M oder mehreren. Das jeweilige Mischorgan M braucht nicht, wie gezeigt, eine Mischschnecke mit wenigstens einer Wendel 7, einem Kernrohr 8 und zwei um etwa 180° versetzten Aufnahmeplatten 9 oder Rührflügeln in der Nähe eines Bodens 20 eines Mischbehälters 3 zu sein, sondern es können andere Arten angetriebener Mischorgane in wenigstens einem Mischbehälter 3 eingesetzt werden.

Im gezeigten Ausführungsbeispiel ist der z.B. ovalkonische Mischbehälter 3 über Wiegezellen 4 auf einem Unterbau 5 montiert. Die Wiegezellen 4 stehen beispielsweise in drahtloser oder verdrahteter Verbindung mit einem Wiegecomputer 6, an welchem ein WiFi- oder Bluetooth-Modul 16 angeordnet sein kann, welcher beispielsweise drahtlos mit einer Cloud, einem Smartphone, oder dergleichen kommunizieren kann.

Der Mischbehälter 3 ist beispielsweise oben offen, um mit mindestens zwei Futterkomponenten beladen zu werden, aus denen das Mischorgan M durch Drehung um eine im Wesentlichen vertikale Achse eine Futtermischung F bildet, in der vor dem Ausbringen von Rationen durch eine mittels eines Verschlusses 10' freilegbare Ausbringöffnung 10 eine vorbestimmte Mischgenauigkeit erarbeitet werden muss. Dies erfolgt durch das angetriebene Mischorgan M. Es können mehrere Mischorgane vorgesehen sein. Die einzelnen Futterkomponenten werden beispielsweise nacheinander geladen, z.B. von oben mit einem Schaufellader und in der Futtermischung F vermischt. Dies erfolgt z.B. unter Mitwirkung des Wiegecomputers 6, der zu ladende Mengen misst und/oder anfordert.

Kern der Erfindung ist wenigstens ein im Inneren des Futtermischwagens 1 verbautes Sensorsystem S, dessen Aufgabe darin besteht, zumindest Futterwerte in der Futtermischung F während des Mischprozesses zu ermitteln. Darüber hinaus kann das Sensorsystem S als Kombinationssensorsystem ausgebildet und betrieben werden, das sowohl die Futterwerte als auch die Mischgenauigkeit im Inneren der Futterschmischung F feststellt und z.B. den Mischprozess beenden kann, beispielsweise bei homogener Verteilung der Futterbestandteile in der Futtermischung, repräsentiert durch keine oder nur mehr geringe Fluktuationen der Futterwerte in der Futtermischung.

Der Begriff Futterwerte bezieht sich z.B. auf die Nährstoffzusammensetzung und gegebenenfalls die Nährstoffkonzentrationen in der Futtermischung, den Gehalt an Wasser und/oder Trockensubstanz, Stärke, Protein, Rohprotein, Fasern und verschiedene andere chemische Elemente, die in der endgültig auszugebenden Futtermischung in für das Nutzvieh optimaler Zusammensetzung und/oder optimalen Mengen enthalten sein sollen.

Beispielsweise werden vom Sensorsystem S zunächst Futterwerte einer Charge einer ersten Futterkomponente ermittelt und wird dann über den Wiegecomputer 6 eine weitere Futterkomponente geladen und untergemischt, und wird nach erneuter Feststellung aktueller Futterwerte die Menge der zweiten oder sogar ersten Futterkomponente angepasst oder eine weitere oder die gleiche Futterkomponente nach Maßgabe durch den Wiegecomputer 6 geladen und untergemischt, und dann erst gegebenenfalls wenigstens eine weitere Futterkomponente auf gleiche Weise, usw..

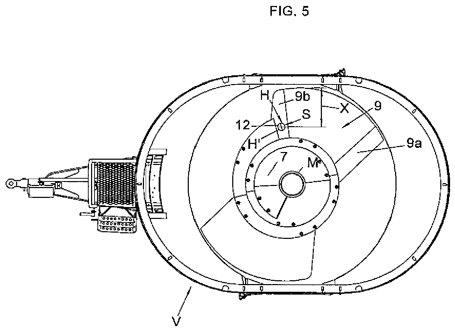

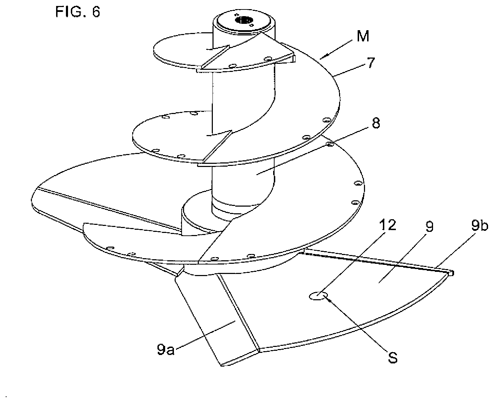

Eine praxisbezogene Vorgangsweise kann z.B. wie folgt sein:
Der Betreiber lädt eine vorgeschlagene Menge Raufutter (Gras oder Heu oder Mais oder einen anderen, kostengünstigen Nährstoff) in den Mischbehälter 3, mischt und wartet ein vom Sensorsystem S ermitteltes Ergebnis der Futterwerte ab. Damit hat er eine Entscheidungshilfe, ob und wie viel des Raufutters nachzuladen ist, oder ob und wie viel teures Kraftfutter und/oder andere Nebenprodukte (z.B. Biertreber, Rübengeschnetzeltes etc.) nachzuladen und einzumischen sind, um letztendlich die gewünschte Zusammensetzung in der Futtermischung mit günstigem Kostenaufwand zügig zu erzielen. Dabei ermittelt das Sensorsystem S (in Fig. 5 und 6 sogar ein weiterer Kopf H') kontinuierlich oder in Abständen das Ergebnis des Mischprozesses.

In den gezeigten Ausführungsbeispielen ist mindestens ein Kopf H des Sensorsystems S mitdrehend am drehangetriebenen Mischorgan M und so verbaut, dass er während des Mischprozesses in innigem Kontakt mit der Futtermischung F steht oder die Futtermischung F in deren Inneren abtastet. Bei alternativen, nicht gezeigten Ausführungsformen kann hingegen der Kopf H an oder in oder hinter der Behälterwand 11 oder dem Boden 20 platziert sein, und zwar an einer Messstelle, an der der Kopf H in das Innere der Futtermischung F blickt. Als weitere Alternative ist sogar eine Platzierung des Sensors S denkbar, bei der der Sensor S die Futtermischung F berührungslos abtastet. Bei einer Platzierung des Sensors S in der Behälterwand 11 könnte dieser z.B. an einer Leitfläche 21 der Behälterwand 11 platziert sein, die beispielsweise bei zwei gleichzeitig arbeitenden Mischorganen die Futtermischung von einem Mischorgan zum nächsten leitet.

Die Aufnahmeplatte 9 oder der Rührflügel des hier als vertikale Mischschnecke gezeigten Mischorgans M, das in Fig. 6 im Uhrzeigersinn drehangetrieben wird, besitzt einen in Drehrichtung vorne liegenden ansteigenden Teil 9a und einen in Drehrichtung hinten liegenden abfallenden Teil 9b.

In Fig. 1 ist der Kopf H am ansteigenden Teil 9a installiert, derart, dass von der Futtermischung F eine transparente Scheibe 12 an der Oberfläche des ansteigenden Teils 9a überstrichen wird. Die Scheibe 12 kann bündig in der Oberfläche platziert sein, oder zwecks besserer Reinigung erhaben, oder zum Schutz versenkt gegenüber der Oberfläche. Zum Kopf H gehören in der gezeigten Ausführungsform optional ein Analyserechner 13 sowie daneben ein Paket aus wenigstens einer Batterie 14 und einem Bluetooth- oder WiFi-Sender-Modul 15. Die Batterie 14 ist entweder austauschbar oder aufladbar.

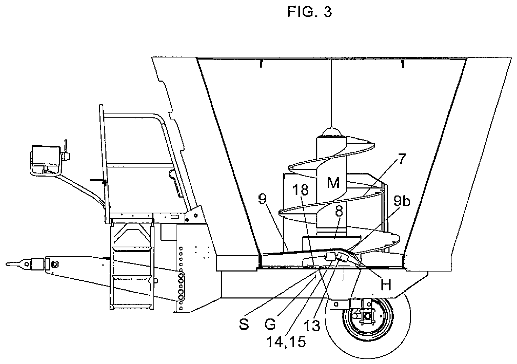

Zum Aufladen der Batterie kann gemäß Fig. 3 am Futtermischwagen 1 ein Generator G vorgesehen sein, der hier über eine Schleifringverbindung 18 die Batterie 14 lädt. Alternativ kann die Batterie durch geeignete Einrichtungen auf drahtlosem Weg geladen werden. Zweckmäßig befinden sich der Analyserechner 13, die Batterie 14 und der Modul 15 an der der Oberfläche der Aufnahmeplatte 9 bzw. des Rührflügels abgewandte Rückseite außerhalb des Hauptstroms der Futtermischung während des Mischprozesses. Eine drahtlose Kommunikationsverbindung K ist in Fig. 1 gestrichelt beispielsweise zwischen dem Sendermodul 15 und dem Modul 16 am oder des Wiegecomputers 6 vorgesehen. Bei einer verdrahteten Verbindung könnte der Betriebsstrom für den Kopf H und seine Ausstattung direkt von außen über ein Netzteil eingespeist werden und könnten seine Messwerte ebenso übertragen werden (z.B. bei stationären oder automatischen Anlagen).

In Fig. 1 ist gestrichelt bei 23 eine optional am Mischbehälter 3 angeordnete Ladeeinrichtung zum Einbringen der Futterkomponenten angedeutet. Die Futterkomponenten können aber auch durch eine eigene Ladeeinrichtung, beispielsweise einen Schaufel- oder Frontlader von oben in den Mischbehälter 3 eingefüllt werden.

Das Sensorsystem S arbeitet zweckmäßig mit nahezu infrarotem Licht (NIR), das vom Kopf H durch die Scheibe 12 in das Innere der Futtermischung F gestrahlt und von dem zur Ermittlung der Futterwerte zumindest ein Teil durch die Scheibe 12 zum Kopf H reflektiert wird, beispielsweise mit Hilfe nicht näher hervorgehobener optischer Einrichtungen, und dessen Lichtwellen-Spektren ausgewertet werden

Bezüglich der Mischgenauigkeit kann ein weiterer Kopf H' (Fig. 5, 6) mit Bildverarbeitung als separater Mischgenauigkeitssensor am Mischorgan M betrieben werden, alternativ in anderer Ausbildung sogar nach einem Magnetresonanzprinzip.

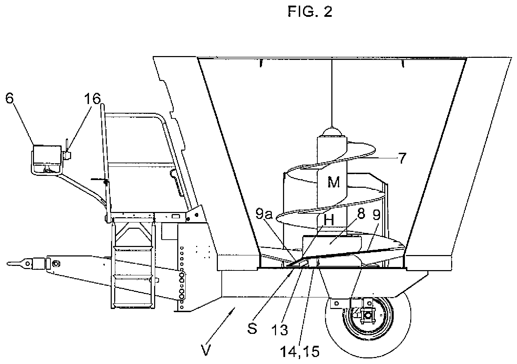

Fig. 2 verdeutlicht eine Drehposition des Mischorgans M kurz vor der Drehposition der Fig. 1 und zeigt den Kopf H im ansteigenden Teil 9a, wobei die unterhalb des ansteigenden Teils 9a der Aufnahmeplatte 9 liegenden Komponenten 13,14,15 geschützter untergebracht sind.

Fig. 3 verdeutlicht in der gleichen Drehposition des Mischorgans M wie in Fig. 1 eine Platzierung des Kopfes H im Bereich des abfallenden Teil 9b der Aufnahmeplatte 9 bzw. des Rührflügels.

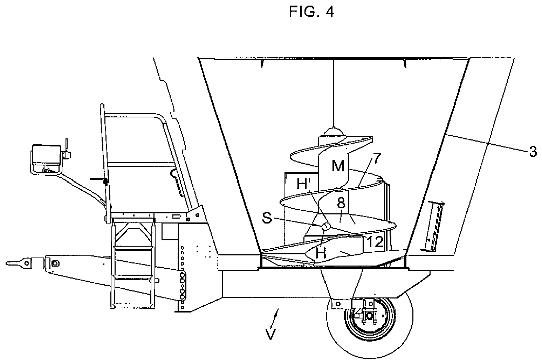

Fig. 4 verdeutlicht eine Position des Kopfes H in einem hier z.B. konischen Teil des Kernrohres 8 knapp oberhalb des nicht gezeigten Getriebes der Mischschnecke, also etwas weiter oben als in den Fig. 1 bis 3, jedoch so tief wie möglich, um auch bei geringem Beladestadium des Mischbehälters 3 den Kontakt mit der Futtermischung F sicherzustellen.

Fig. 5 verdeutlicht in der Draufsicht die Platzierung des Kopfes H des Sensorsystems S etwa gemäß Fig. 3 am Teil 9b der Aufnahmeplatte 9 oder des Rührflügels. Der radiale Abstand x des Kopfes H vom größten Durchmesser des Mischorgans M kann etwa ein Drittel des maximalen Durchmessers betragen. Im Falle separater Köpfe H, H' (bzw. separater Sensorsysteme S) für Futterwerte und die Mischgenauigkeit sind diese zweckmäßig entweder kombiniert oder nahe beieinander platziert.

Fig. 6 verdeutlicht in einer Perspektivansicht des Mischorgans M die Position des Kopfes H zweier Köpfe H, H' etwa gemäß Fig. 1 in der Umfangsmitte der Aufnahmeplatte 9, d.h. in deren entgegengesetzt zur Drehrichtung ansteigendem Teil 9a.

Beim als ein mögliches Beispiel erwähnten Cloud-Computing kommuniziert beispielsweise das Sensorsystem S über Bluetooth oder WiFi mit dem Wiegecomputer 6. In der Futtermischung F aus mit zunächst der ersten geladenen Futterkomponente werden Futterwerte ermittelt und dann vom Modul 6 in die Cloud versendet. In der Cloud sind z.B. Algorithmen abgelegt, mit denen ein Analyseresultat errechnet und an den Wiegecomputer 6 rückübertragen wird, der dann die Menge der ersten nachzuladenden oder der nächsten zu ladenden Futterkomponente(n) bestimmt, und die Beladung überwacht. Nach Analyse der vervollständigten Futtermischung F wird diese Abfolge wiederholt, bis die nächste Futterkomponente geladen wird und so weiter.

In jedem Fall soll der Kopf H oder H' so platziert sein, dass er beim Mischprozess entweder in innigem Kontakt mit der Futtermischung F steht oder in deren Inneres blickt, während Futterwerte und/oder die Mischgenauigkeit ermittelt werden. Dabei ist eine schräge Lage der Scheibe 12 im Raum von Vorteil, weil die Futtermischung genügend Druck auf die Scheibe 12 ausübt und einen Selbstreinigungseffekt leisten kann.

Selbstverständlich können andere Mitteil in Futtermischwagen vorgesehen sein, z.B. eine Spritzanlage oder eine Waschanlage, um die Scheibe 12 sauber zu halten, bzw. vorzubeugen, dass sich keine klebrigen Silagebestandteile (z.B. Zucker) auf der Scheibe 12 festsetzen.

## Patentansprüche

1. Futtermischwagen (1), mit einem wenigstens ein beim Mischprozess mindestens zweier Futterkomponenten bis zu einer vorbestimmten Mischgenauigkeit in der Futtermischung (F) drehantreibbares Mischorgan (M) enthaltenden Mischbehälter (3), und wenigstens einem elektronisch betreibbaren, wenigstens einen Kopf (H, H') aufweisenden Sensorsystem (S) zum Untersuchen des Futters während des Mischprozesses auf Futterwerte und/oder die Mischgenauigkeit jeweils innen in der Futtermischung (F), **dadurch gekennzeichnet, dass** mitdrehend an einer Messstelle am oder im Mischorgan (M) der Kopf (H) eines Futterwertsensorsystems und/oder der Kopf (H') eines Mischgenauigkeits-Sensorsystems oder der Kopf (H) eines Kombinationssensorsystems zum Ermitteln von Futterwerten der Futtermischung (F) und zum Ermitteln der Mischgenauigkeit in der Futtermischung (F) angeordnet ist/sind.

2. Futtermischwagen nach Anspruch 1, **dadurch gekennzeichnet, dass** das Sensorsystem (S) ein auf reflektierte NIR-Lichtwellen ansprechendes NIR-Sensorsystem (S) ist.

3. Futtermischwagen nach Anspruch 1, **dadurch gekennzeichnet, dass** mit dem Sensorsystem (S) die Mischgenauigkeit anhand mittels des Kopfes (H) ermittelter Futterwerte oder mittels eines weiteren Kopfes (H'), z.B. durch elektronische Bildverarbeitung, ermittelbar ist.

4. Futtermischwagen nach Anspruch 3, **dadurch gekennzeichnet, dass** der, vorzugsweise mit einem Analyserechner (15) und/oder einer Batterie (14) ausgestattete Kopf (H) des Sensorsystems (S) über einen beim oder im Kopf (H) angeordneten Bluetooth- oder WiFi-Sendermodul (14, 15) und einer drahtlosen Funksignalübertragungsstrecke (K), vorzugsweise einer Bluetooth- oder WiFi-Verbindung, mit einem außerhalb des Mischbehälters (3) platzierten, z.B. einem mit einer Cloud kommunizierenden, Bluetooth- oder WiFi-Empfängermodul (16) verbunden ist.

5. Futtermischwagen nach Anspruch 1, **dadurch gekennzeichnet, dass** die Batterie (14) entweder tauschbar oder aufladbar ist, vorzugsweise über eine Schleifringverbindung (18) und einen am Futtermischwagen (1) angeordneten Generator (G) oder drahtlos.

6. Futtermischwagen nach wenigstens einem der vorhergehenden Ansprüche, **dadurch gekennzeichnet, dass** das Sensorsystem (S) mit einer computerisierten Steuerung und/oder einem Wiegecomputer (6) verknüpft ist, und dass über die Steuerung bzw. den Wiegecomputer (6) zu ladende Mengen und/oder Sorten beim Mischprozess gemischter Futterkomponenten an die ermittelten Futterwerte anpassbar sind.

7. Futtermischwagen nach Anspruch 6, **dadurch gekennzeichnet, dass** während des Mischprozesses über die Steuerung bzw. den Wiegecomputer (6) die jeweils ermittelten Futterwerte in der Futtermischung (F) mit das Beladestadium im Mischbehälter (3) repräsentierenden Messdaten des Wiegecomputers (6) vergleichbar sind.

8. Futtermischwagen nach wenigstens einem der vorhergehenden Ansprüche, **dadurch gekennzeichnet, dass** der mit dem Sensorsystem (S) ausgestattete Futtermischwagen (1) Teil einer automatischen Futteranlage ist, die zumindest auf der Basis während des Mischprozesses ermittelter Futterwerte und/oder der Mischgenauigkeit steuerbar ist.

9. Futtermischwagen nach wenigstens einem der vorhergehenden Ansprüche, **dadurch gekennzeichnet, dass** das wenigstens eine Mischorgan (M) eine Mischschnecke mit wenigstens einer bodenseitigen Aufnahmeplatte oder einem Rührflügel (9), einer Schneckenwendel (7) und , vorzugsweise, einem Schneckenkernrohr (8) ist, und dass der mindestens eine Kopf (H) des Sensorsystems (S), vorzugsweise mit Batterie und Sendermodul (14, 15), an der Aufnahmeplatte bzw. dem Rührflügel (9) oder der Schneckenwendel (7) oder am Schneckenkernrohr (8) angeordnet ist, vorzugsweise zwischen nahe dem Boden (20) des Behälters (3) und im unteren Drittel der Schneckenhöhe.

10. Futtermischwagen nach wenigstens einem der vorhergehenden Ansprüche, **dadurch gekennzeichnet, dass** der Kopf (H) des Sensorsystems (S) eine transparente Scheibe (12), vorzugsweise aus Glas, Plexiglas oder Panzerglas, aufweist, die bündig mit oder versenkt oder erhaben gegenüber der von der Futtermischung (F) an der Messstelle kontaktierten Oberfläche des Mischorgans (M) ist, und dass die Batterie und der Sendermodul (14, 15) bei der Messstelle an der der Oberfläche abgewandten Rückseite des Mischorgans (M) oder der Behälterwand (11) oder des Bodens (2) angeordnet sind.

11. Futtermischwagen nach Anspruch 9, **dadurch gekennzeichnet, dass** der Kopf (H) des Sensorsystems (S) vom größten Außendurchmesser der Mischschnecke mit einem Abstand (X) entsprechend einem Abstand (x) entsprechend etwa einem Drittel oder mehr des Außendurchmessers beabstandet ist.

12. Futtermischwagen nach Anspruch 9, **dadurch gekennzeichnet, dass** der Kopf (H) des Sensorsystems (S) in einem ansteigenden oder einem abfallenden Teil (9a, 9b) der Aufnahmeplatte (17) oder des Rührflügels (9) angeordnet ist.

13. Futtermischwagen nach wenigstens einem der vorhergehenden Ansprüche, **dadurch gekennzeichnet, dass** der Futtermischwagen (1) beim Mischbehälter (3) mit dem Wiegecomputer (6) verknüpfte Wiegezellen (4), wenigstens eine mittels eines verstellbaren Verschlusses (10') freilegbare Ausbringöffnung (10) in der Behälterwand (11) und, vorzugsweise, zum Selbstladen eine Futterkomponenten-Ladeeinrichtung (23) aufweist, wobei der Futtermischwagen selbstfahrend, selbstladend, stationär, oder geschoben bzw. gezogen einsetzbar ist.

## Claims

1. A fodder mixing wagon (1), comprising a mixing container (3) containing at least one mixing device (M), which is adapted to be rotatingly driven during a mixing process in the fodder mixture (F) of at least two fodder components up to a predetermined mixing accuracy of the fodder mixture (F), and at least one electronically operable sensor system (S) having at least one head (H, H') and used for analyzing fodder values and/or the mixing accuracy respectively in the interior of the fodder mixture (F), **characterized in that** on a mixing site, the head (H) of a fodder-value sensor system (S) and/or the head (H') of a mixing-accuracy sensor system (S) is/are arranged on or in the mixing device (M) for rotation together with the latter, for determining fodder values and the mixing accuracy in the fodder mixture (F).

2. The fodder mixing wagon according to claim 1, **characterized in that** the sensor system (S) is an NIR sensor system (S) responding to reflected NIR light waves.

3. The fodder mixing wagon according to claim 1, **characterized in that,** by means of the sensor system (S), the mixing accuracy is determinable on the basis of fodder values determined by means of the head (H), or by means of a further head (H') e.g. through electronic image processing.

4. The fodder mixing wagon according to claim 3, **characterized in that** the head (H) of the sensor system (S), which is preferably equipped with an analysis computer (13) and/or a battery (14), is connected, via a Bluetooth or WiFi transmitter module (14, 15) arranged near or in the head (H) and a wireless radio signal link (K), preferably a Bluetooth or WiFi connection, to a Bluetooth or WiFi receiver module (16) placed outside the mixing container (3), communicating with a cloud.

5. The fodder mixing wagon according to claim 1, **characterized in that** the battery (14) of the head (H) is either replaceable or rechargeable, preferably via a slip-ring connection (18) and a generator (G) arranged on the fodder mixing wagon (1), or in a wireless fashion.

6. The fodder mixing wagon according to at least one of the preceding claims, **characterized in that** the sensor system (S) is linked to a computerized control and/or a weighing computer (6), and that, via the control or the weighing computer (6), respectively, amounts and/or types of fodder to be loaded can be matched with to the fodder values determined during the mixing process of mixed fodder components.

7. The fodder mixing wagon according to claim 6, **characterized in that,** during the mixing process, the respective determined fodder values in the fodder mixture (F) can be compared, via the control and the weighing computer (6), respectively, with measurement data of the weighing computer (6) representative of the loading condition in the mixing container (3).

8. The fodder mixing wagon according to at least one of the preceding claims, **characterized in that** the fodder mixing wagon (1) equipped with the sensor system (S) is part of an automatic feeding system which is controllable at least on the basis of fodder values and/or the mixing accuracy ascertained during the mixing process.

9. The fodder mixing wagon according to at least one of the preceding claims, **characterized in that** the at least one mixing device (M) is a mixing auger with at least one bottom-side take-up plate or agitator blade (9), an auger helix (7) and, preferably, an auger core tube (8), and that the at least one head (H) of the sensor system (S), preferably with its battery and its transmitter module (14, 15), is arranged on the take-up plate or the agitator blade (9) or on the auger helix (7) or on the auger core tube (8), preferably in an area close to the bottom (20) of the container (3) and in the lower third of the auger height.

10. The fodder mixing wagon according to at least one of the preceding claims, **characterized in that** the head (H) of the sensor system (S) comprises transparent disc (12), preferably made of glass, acrylic glass or bullet-proof glass, which is flush with or countersunk relative to or raised above the surface contacted by the fodder mixture (F) at the measuring site, and that the battery and the transmitter module (14, 15) are arranged near the measuring site on the rear side opposite to the surface of the mixing device (M) or of the container wall (11) or of the bottom (20).

11. The fodder mixing wagon according to claim 9, **characterized in that** the head (H) of the sensor system (S) is spaced apart from the maximum outer diameter of the mixing auger with a distance (X) corresponding to a distance (x) corresponding to approximately one third or more of the outer diameter.

12. The fodder mixing wagon according to claim 9, **characterized in that** the head (H) of the sensor system (S) is arranged in an ascending or a descending part (9a, 9b) of the take-up plate or of the agitator blade (9).

13. The fodder mixing wagon according to at least one of the preceding claims, **characterized in that** the fodder mixing wagon (1) comprises, near the mixing container (3), weighing cells (4) linked to the weighing computer (6), at least one discharge opening (10) provided in the container wall (11) and adapted to be opened by means of a displaceable closure (10'), and, preferably, a fodder-component loading unit (23) for self-loading, the fodder mixing wagon being adapted to be used in a self-propelled, self-loading, stationary or pushed or towed fashion.

## Revendications

1. Véhicule mélangeur de fourrage (1), avec un récipient mélangeur (3) contenant au moins un élément mélangeur (M) qui peut être mis en rotation pour obtenir une précision de mélange prédéterminée dans le mélange de fourrage (F) pendant le processus de mélange d'au moins deux composants de fourrage, et au moins un système de capteurs (S) à commande électronique avec au moins une tête (H, H') pour examiner le fourrage pendant le processus de mélange pour des valeurs de fourrage et/ou la précision de mélange respectivement à l'intérieur du mélange de fourrage (F), **caractérisé en ce que** la tête (H) d'un système de capteur de valeur de fourrage et/ou la tête (H') d'un système de capteur de précision de mélange ou la tête (H) d'un système de capteur combiné pour déterminer des valeurs de fourrage du mélange de fourrage (F) et pour déterminer la précision de mélange dans le mélange de fourrage (F) est/sont agencée(s) pour tourner à un point de mesure sur ou dans l'élément de mélange (M).

2. Mélangeur mélangeur de fourrage selon la revendication 1, **caractérisé en ce que** le système de capteurs (S) est un système de capteurs NIR (S) sensible aux ondes lumineuses NIR réfléchies.

3. Véhicule mélangeur de fourrage selon la revendication 1, **caractérisé en ce que** le système de capteurs (S) peut être utilisé pour déterminer la précision de mélange au moyen de valeurs de fourrage déterminées au moyen de la tête (H) ou au moyen d'une autre tête (H'), par exemple par traitement électronique d'images.

4. Véhicule mélangeur de fourrage selon la revendication 3, **caractérisé en ce que** la tête (H) du système de capteurs (S), de préférence équipée d'un ordinateur d'analyse (15) et/ou d'une batterie (14), est reliée par un module de capteurs (14, 15) Bluetooth ou WiFi disposé sur ou dans la tête (H) et par une voie de transmission de signaux radio (K) sans fil, de préférence une connexion Bluetooth ou WiFi, à un système de capteurs (S) placé à l'extérieur du récipient mélangeur (3) et qui est relié à la tête (H) au moyen d'une connexion Bluetooth ou WiFi.par exemple un module récepteur Bluetooth ou WiFi (16) communiquant avec un nuage.

5. Véhicule mélangeur de fourrage selon la revendication 1, **caractérisé en ce que** la batterie (14) est soit remplaçable, soit rechargeable, de préférence par l'intermédiaire d'une liaison à bague collectrice (18) et d'un générateur (G) ou disposée sans fil sur le véhicule mélangeur de fourrage (1).

6. Véhicule mélangeur de fourrage selon au moins l'une des revendications précédentes, **caractérisé en ce que** le système de capteurs (S) est relié à un système de commande informatisé et/ou à un ordinateur de pesage (6), et **en ce que** les quantités et/ou les types à charger par l'intermédiaire du système de commande et/ou de l'ordinateur de pesage (6) pendant le processus de mélange de composants de fourrage mélangés peuvent être adaptés aux valeurs de fourrage déterminées.

7. Véhicule mélangeur de fourrage selon la revendication 6, **caractérisé en ce que**, pendant le processus de mélange, les valeurs de fourrage respectivement déterminées dans le mélange de fourrage (F) sont comparables, par l'intermédiaire de la commande ou du calculateur de pesage (6), aux données de mesure du calculateur de pesage (6) représentant le stade de chargement dans le récipient de mélange (3).

8. Véhicule mélangeur de fourrage selon au moins l'une des revendications précédentes, **caractérisé en ce que** le véhicule mélangeur de fourrage (1) équipé du système de capteurs (S) fait partie d'une installation automatique de fourrage qui peut être commandée au moins sur la base de valeurs de fourrage déterminées pendant le processus de mélange et/ou de la précision de mélange.

9. Véhicule mélangeur de fourrage selon au moins l'une des revendications précédentes, **caractérisé en ce que** l'au moins un organe mélangeur (M) est une vis mélangeuse avec au moins une plaque de réception ou une pale d'agitation (9) côté fond, un dispositif de rotation de vis (7) et, de préférence, un tube de noyau de vis (8), et **en ce que** la au moins une tête (H) du système de capteurs (S), de préférence avec une batterie et un module émetteur (14, 15), est montée sur la plaque de réception ou la pale d'agitation (9). la pale de l'agitateur (9) ou le dispositif de rotation de la vis (7) ou sur le tube du noyau de la vis (8), de préférence entre le fond (20) de la cuve (3) et le tiers inférieur de la hauteur de la vis.

10. Véhicule mélangeur de fourrage selon au moins l'une des revendications précédentes, **caractérisé en ce que** la tête (H) du système de capteurs (S) présente une vitre transparente (12), de préférence en verre, en plexiglas ou en verre pare-balles, qui est affleurant ou en retrait ou en surélévation par rapport à la surface de l'organe mélangeur (M) avec laquelle le mélange de fourrage (F) entre en contact au point de mesure, et que la pile et le module émetteur (14, 15) sont disposés au point de mesure sur la face arrière de l'organe mélangeur (M) ou sur la paroi (11) du récipient ou sur le fond (2) opposé à la surface.

11. Véhicule mélangeur de fourrage selon la revendication 9, **caractérisé en ce que** la tête (H) du système de capteur (S) est espacée du plus grand diamètre extérieur de la vis de mélange à une distance (X) correspondant à une distance (x) correspondant à environ un tiers ou plus du diamètre extérieur.

12. Véhicule mélangeur de fourrage selon la revendication 9, **caractérisé en ce que** la tête (H) du système de capteurs (S) est disposée dans une partie montante ou descendante (9a, 9b) de la plaque de réception (17) ou de la pale d'agitation (9).

13. Véhicule mélangeur de fourrage selon au moins l'une des revendications précédentes, **caractérisé en ce que** le véhicule mélangeur de fourrage (1) présente des cellules de pesage (4) reliées au calculateur de pesage (6) sur le récipient mélangeur (3), au moins une ouverture de sortie (10) dans la paroi du récipient (11) qui peut être dégagée au moyen d'une fermeture réglable (10') et, de préférence, un dispositif de chargement de composants de fourrage (23) pour l'auto-chargement, le véhicule mélangeur de fourrage étant automoteur, auto-chargeur, stationnaire ou poussé ou poussé ou tiré au moyen d'une fermeture réglable (10').
